# EUROPEAN PATENT SPECIFICATION

(11) **EP 3 627 183 B1**
(45) Date of publication and mention of the grant of the patent: **11.05.2022**
(21) Application number: 18195241.7
(22) Date of filing: 18.09.2018
(51) Int. Cl.: G01S 13/86, H04N 7/18, G05D 1/02, G01S 13/931, G05D 1/00

(54) **CONTROL SYSTEM FOR AUTONOMOUS DRIVING OF A VEHICLE**
STEUERUNGSSYSTEM ZUM AUTONOMEN FAHREN EINES FAHRZEUGS
SYSTÈME DE COMMANDE POUR LA CONDUITE AUTONOME D'UN VÉHICULE

(43) Date of publication of application: 25.03.2020
(73) Proprietor: KNORR-BREMSE Systeme für Nutzfahrzeuge GmbH, 80809 München (DE)
(72) Inventor: NEMETH, Dr. Huba, 1116 Budapest (HU); SZÖLLOSI, Adam, 1119 Budapest (HU); TIHANYI, Dr. Viktor, 1032 Budapest (HU); GAL, Balazs, 1036 Budapest (HU)
(74) Representative: Prüfer & Partner mbB Patentanwälte · Rechtsanwälte

(56) References cited:
- DE-A1-102016 116 859
- US-A1- 2014 240 502
- US-B1- 9 381 916

## Description

The invention relates to a control system for autonomous driving of a vehicle, in particular to a control system for autonomous driving of a transport vehicle, as e.g. a truck and trailer combination.

The autonomous operation of transport vehicles is a new field. Highly sophisticated functions require high-end hardware infrastructure including different type of sensors and perception technologies. Until now, SAE Automation level 2 systems require presence and attention of the driver. SAE Automation level 3 systems should manage autonomous driving without continuous attention of the driver. In this case, an incident may occur when an element of the system malfunctions or becomes offline.

Until now, in particular in the field of transport vehicle, no safe solution or consideration which is able to handle such a situation and is able to carry out minimal risk safety manoeuvre even after a partial malfunction has been known.

Document DE 10 2016 116 859 A1 discloses a sensor arrangement for an autonomous driven vehicle, wherein a tractor unit is provided with cameras and forwardly directed radar sensors and a trailer is provided with laterally directed cameras.

Therefore, the object underlying the invention is to enable a more secure safe-operation of autonomously driving vehicle.

The object is achieved by a system according to claim 1.

According to an aspect of the invention, a control system for autonomous driving of a vehicle, comprises a first environment sensor attached at a specific location of the vehicle configured to observe a specific portion of environments of the vehicle, and at least one second environment sensor attached at any specific location of the vehicle configured to observe at least the same portion of the specific portion of environments of the vehicle simultaneously to an observation of the first environment sensor.

By such a configuration of the control system, wherein several sensors simultaneously observe a same portion of a specific portion of environments of the vehicle, a redundant environment sensor architecture as a part of a redundant HW architecture that can fulfil the requirement to carry out minimal risk safety manoeuvre even after a partial malfunction is provided.

In an advantageous implementation of the control system, the first environment sensor is a radar device attached at the rear side of the vehicle such that it looks rearwards.

By using the radar device as the first environment sensor, a reliable sensor supplying an exact observation result even in darkness or under bad weather conditions is provided.

In an advantageous implementation of the control system, the second environment sensor or one of the second environment sensors is a camera device attached at the rear side of the vehicle such that it looks rearwards.

By such a configuration of the control system, an environment sensor using another physical principle is provided so that the environment sensors can be insensitive to different environmental impacts. Therefore, a damage of one of the environment sensors does not inevitably lead to a damage of a redundant environment sensor using a different physical operation principle.

In a further advantageous implementation of the control system, the first environment sensor is a camera device attached at a rear side of the vehicle such that it looks rearwards.

By using the camera device as the first environment sensor, the control system can be used for a docking manoeuvre and for detecting the environments while enhancing the insensitivity of the control system.

In a further advantageous implementation of the control system, the second environment sensor or one of the second environment sensors is an ultrasonic sensor device attached at the rear side of the vehicle such that it looks rearwards.

By using the ultrasonic sensor device, the control system can also be used for a docking manoeuvre and for detecting the environments while enhancing the insensitivity of the control system.

In another advantageous implementation of the control system, the second environment sensor or one of the second environment sensors is a Lidar device attached at the rear side of the vehicle such that it looks rearwards.

This configuration of the control system provides a long range detection of the specific portion of the environments of the vehicle.

In a further advantageous implementation of the control system, the second environment sensor or one of the second environment sensors is a wide angle camera device attached at an area of a rear corner of the vehicle and it is configured to look rearwards and laterally of the vehicle for observing the specific portion of the environments of the vehicle and a further specific portion of the environments of the vehicle.

By this configuration, not only the specific portion of the environments of the vehicle, e.g. behind the vehicle, can be observed but also a further specific portion of the environments of the vehicle, e.g. laterally of the vehicle, can be observed.

In a specific advantageous implementation of the control system, the wide angle camera device is provided with a fisheye lens.

The provision of the fisheye lens enables an easy structure of the wide angle camera device while observation of a portion of environment behind the vehicle and of a portion of environment laterally of the vehicle is possible.

In a further specific advantageous implementation of the control system, the camera device is configured to look also downwardly.

By such an arrangement, a substantially unobstructed observation of the portion of environment behind the vehicle and of a portion of environment laterally of the vehicle is easily possible.

In an embodiment according to the invention, the control system further comprises a side radar device attached at a lateral side of the vehicle such that it looks laterally of the vehicle for observing the further specific portion of the environments of the vehicle and another device for observing the further specific portion of the specific environments of the vehicle.

By the radar device for observing the further specific portion of the environments of the vehicle, a reliable sensor supplying an exact observation result even in darkness or under bad weather conditions is provided.

In a further advantageous implementation, the control system further comprises a side Lidar device attached at a lateral side of the vehicle such that it looks laterally of the vehicle for observing the further specific portion of the environments of the vehicle and another device for observing the further specific portion of the environments of the vehicle.

By the Lidar device attached at a side of the vehicle, monitoring objects in close proximity at the respective side, detecting a hazardous object in close proximity with high confidence, and providing a 3 D representation of the surrounding environments are possible.

According to another aspect of the invention, a trailer attachable to an autonomous driven vehicle comprises the control system.

When the trailer is provided with the control system, the portion of environments behind the trailer and lateral of the trailer can be monitored.

According to an advantageous implementation, a single autonomous driven vehicle comprises the control system.

In this case, the single vehicle without an attached trailer can perform a safe autonomous driving even in case of, e.g., a docking manoeuver.

According to further aspects of the invention, a system comprises a trailer comprising the control system and a single autonomous driven vehicle provided with the control system or without the control system.

By these configurations, in any case, the safe autonomous driving of the system is possible even in case of, e.g., a docking manoeuver.

In the following, the invention is elucidated in detail by an embodiment referring to the attached drawing.

In particular,

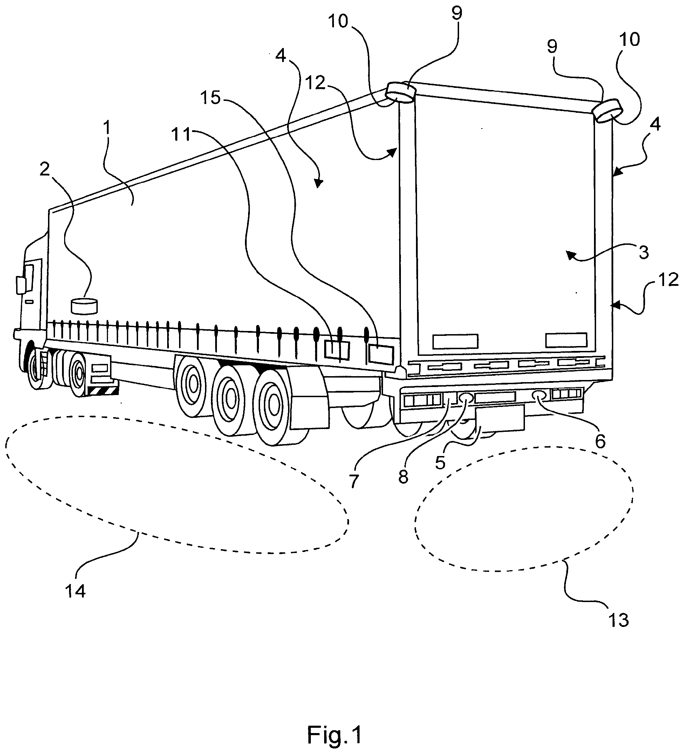

Fig. 1 shows a vehicle including a control system according to the invention.

**Fig. 1** shows a vehicle 1 including a control system 2 for autonomous driving of the vehicle 1. The vehicle 1 is trailer, wherein the trailer has a rear side 3 and two lateral sides 4. Alternative, the vehicle 1 can also be provided in another configuration, e.g. a single autonomous driven vehicle, or a system comprising a trailer including the control system 2 and a single autonomous driven vehicle either comprising the control system 2 or without the control system 2.

The control system 2 comprises a first environment sensor attached at any specific location of the vehicle configured to observe a specific portion of environments 13 of the vehicle, and one second environment sensor or several second environment sensors attached at any specific location of the vehicle configured to observe at least a portion of the specific portion of environments 13 of the vehicle 1 simultaneously to an observation of the first environment sensor.

In particular, the first environment sensor is a radar device 5 attached at the rear side 3 of the vehicle 1 such that it looks rearwards for observing the specific portion of environments 13 of the vehicle 1, wherein the specific portion of environments 13 of the vehicle 1 is located behind the vehicle 1.

Alternatively, the first environment sensor can be a camera device 6 attached at the rear side 3 of the vehicle 1 such that it looks rearwards. In an alternative implementation, the first environment sensor can be a sensor functioning on another physical principle.

In this implementation, one of the second environment sensors is the camera device 6 attached at the rear side 3 of the vehicle 1 such that it looks rearwards.

Furthermore, one of the second environment sensors is an ultrasonic sensor device 7 attached at the rear side 3 of the vehicle 1 such that it looks rearwards and another one of the second environment sensors is a Lidar device 8 attached at the rear side 3 of the vehicle 1 such that it looks rearwards.

A further one of the second environment sensors is formed by two wide angle camera devices 9 attached at a rear corner 12 of the vehicle 1 and being configured to look rearwards and laterally of the vehicle 1 for observing the specific portion of the environments 13 of the vehicle 1 and a further specific portion of the environments 14 of the vehicle 1, wherein the further specific portion of the environments 14 of the vehicle 1 is located laterally from the vehicle 1. The wide angle camera devices 9 are respectively provided with a fisheye lens 10. Furthermore, the wide angle camera devices 9 are attached in an area of a rear corner of the vehicle 1 such that they are configured, except from looking rearwards and laterally of the vehicle 1, to look also downwardly. In alternative embodiments, only one wide angle camera device 9 or wide angle camera devices 9 in a suitable number and camera devices having another suitable lens than a fisheye lens 10 are provided. Moreover, alternatively, the wide angle camera devices 9 are not attached at a rear corner 12 of the vehicle 1, but at another location where an area behind and sideward of the vehicle can be seen.

At a lateral side of the vehicle 1, a side radar device 11 is attached such that it looks laterally of the vehicle 1 for observing the further specific portion of the environments 14 of the vehicle 1 and the control system 1 comprises the fisheye lens camera device 9 as another device for observing the further specific portion of the environments 14 of the vehicle 1. Furthermore a side Lidar device is attached such that it looks laterally of the vehicle 1 for observing the further specific portion of the environments 14 of the vehicle 1.

In alternative implementations, not all of the sensors of this implementation are provided, but, depending on the requested functionality, appropriate ones of the sensors are provided.

In use, the environment sensors respectively observe one of the respective portions of the environments 13, 14. One portion of the environments 13 is observed by several environment sensors. In the case that one of the sensors is damaged or does not work due to another reason, the portion of the environments is still observed by at least one other environment sensor. The malfunction of the environment sensor is stored in a system in order to readout later and/or it is displayed to a driver of the vehicle. Although the present invention has been described with reference to specific features and embodiments thereof, it is evident that various modifications and combinations can be made thereto without departing from the scope of the claimed invention

### REFERENCE SIGN LIST

- 1: vehicle
- 2: control system
- 3: rear side
- 4: lateral side
- 5: radar device
- 6: camera device
- 7: ultrasonic sensor device
- 8: Lidar device
- 9: wide angle camera device
- 10: fisheye lens
- 11: side radar device
- 12: rear corner
- 13: specific portion of environments
- 14: further specific portion of environments
- 15: side Lidar device

## Claims

1. A system comprising a trailer attachable to an autonomous driven vehicle (1) and a single autonomous driven vehicle (1), the system comprising a control system (2) configured for autonomous driving of the vehicle (1), comprising
a first environment sensor attached at a specific location of the vehicle (1) configured to observe a specific portion of environments (13) of the vehicle (1), and
at least one second environment sensor attached at any specific location of the vehicle being configured to observe at least a portion of the specific portion of environments (13) of the vehicle (1) simultaneously to an observation of the first environment sensor,
**characterized by** further comprising
a side radar device (11) attached at a lateral side (4) of the trailer of the system such that it looks laterally of the system for observing a further specific portion of the environments (14) of the system and another device for observing the further specific portion of the environments (14) of the system.

2. The system of claim 1, wherein
the first environment sensor is a radar device (5) attached at a rear side (3) of the vehicle (1) such that it looks rearwards.

3. The system of claim 2, wherein
the at least one second environment sensor or one of the at least one second environment sensor is a camera device (6) attached at the rear side (3) of the vehicle (1) such that it looks rearwards.

4. The system of claim 1, wherein
the first environment sensor is a camera device (6) attached at a rear side of the vehicle (1) such that it looks rearwards.

5. The system of anyone of the preceding claims, wherein
the at least one second environment sensor or one of the at least one second environment sensor is an ultrasonic sensor device (7) attached at the rear side (3) of the vehicle (1) such that it looks rearwards.

6. The system of anyone of the preceding claims, wherein
the at least one second environment sensor or one of the at least one second environment sensor is a Lidar device (8) attached at the rear side (3) of the vehicle (1) such that it looks rearwards.

7. The system of anyone of the preceding claims, wherein
the at least one second environment sensor or one of the at least one second environment sensor is a wide angle camera device (9) attached at an area of a rear corner (12) of the vehicle (1) and being configured to look rearwards and laterally of the vehicle (1) for observing the specific portion of the environments (13) of the vehicle (1) and a further specific portion of the environments (14) of the vehicle (1).

8. The system of claim 7, wherein
the wide angle camera device (9) is provided with a fisheye lens (10).

9. The system of claim 7 or 8, wherein
the wide angle camera device (9) is configured to look also downwardly.

10. The system of anyone of the preceding claims, further comprising
a side Lidar device (15) attached at a lateral side (4) of the vehicle (1) such that it looks laterally of the vehicle (1) for observing a further specific portion of the environments (14) of the vehicle (1) and another device for observing the further specific portion of the environments (14) of the vehicle (1).

## Patentansprüche

1. System, das einen an ein autonom betriebenes Fahrzeug (1) anbringbaren Anhänger und ein einzelnes autonom betriebenes Fahrzeug (1) umfasst, wobei das System ein Steuersystem (2) umfasst, das dazu ausgelegt ist, das Fahrzeug (1) autonom zu betreiben, umfassend
einen ersten Umgebungssensor, der an einer spezifischen Position des Fahrzeugs (1) angebracht ist, der dazu ausgelegt ist, einen spezifischen Abschnitt von Umgebungen (13) des Fahrzeugs (1) zu überwachen, und
mindestens einen zweiten Umgebungssensor, der an einer beliebigen spezifischen Position des Fahrzeugs angebracht ist, der dazu ausgelegt ist, mindestens einen Abschnitt des spezifischen Abschnitts von Umgebungen (13) des Fahrzeugs (1) gleichzeitig zu einer Überwachung des ersten Umgebungssensors zu überwachen,
**dadurch gekennzeichnet, dass** es ferner umfasst
eine seitliche Radarvorrichtung (11), die an einer lateralen Seite (4) des Anhängers des Systems derart angebracht ist, dass sie von dem System lateral blickt, um einen weiteren spezifischen Abschnitt der Umgebungen (14) des Systems zu überwachen, und eine andere Vorrichtung zum Überwachen des weiteren spezifischen Abschnitts der Umgebungen (14) des Systems.

2. System nach Anspruch 1, wobei
der erste Umgebungssensor eine Radarvorrichtung (5) ist, die an einer Rückseite (3) des Fahrzeugs (1) derart angebracht ist, dass sie nach hinten blickt.

3. System nach Anspruch 2, wobei
wobei der mindestens eine zweite Umgebungssensor oder einer des mindestens einen Umgebungssensors eine Kameravorrichtung (6) ist, die an der Rückseite (3) des Fahrzeugs (1) derart angebracht ist, dass sie nach hinten blickt.

4. System nach Anspruch 1, wobei
der erste Umgebungssensor eine Kameravorrichtung (6) ist, die an einer Rückseite des Fahrzeugs (1) derart angebracht ist, dass sie nach hinten blickt.

5. System nach einem der vorhergehenden Ansprüche, wobei
der mindestens eine zweite Umgebungssensor oder einer des mindestens einen zweiten Umgebungssensors eine Ultraschallsensorvorrichtung (7) ist, die an der Rückseite (3) des Fahrzeugs (1) derart angebracht ist, dass sie nach hinten blickt.

6. System nach einem der vorhergehenden Ansprüche, wobei
der mindestens eine zweite Umgebungssensor oder einer des mindestens einen Umgebungssensors eine Lidarvorrichtung (8) ist, die an der Rückseite (3) des Fahrzeugs (1) derart angebracht ist, dass sie nach hinten blickt.

7. System nach einem der vorhergehenden Ansprüche, wobei
der mindestens eine zweite Umgebungssensor oder einer des mindestens einen zweiten Umgebungssensors eine Weitwinkelkameravorrichtung (9) ist, die in einem Bereich einer hinteren Ecke (12) des Fahrzeugs (1) angebracht und dazu ausgelegt ist, nach hinten und von dem Fahrzeug (1) lateral zu blicken, um den spezifischen Abschnitt der Umgebungen (13) des Fahrzeugs (1) und einen weiteren spezifischen Abschnitt der Umgebungen (14) des Fahrzeugs (1) zu überwachen.

8. System nach Anspruch 7, wobei
die Weitwinkelkameravorrichtung (9) mit einem Fischaugenobjektiv (10) versehen ist.

9. System nach Anspruch 7 oder 8, wobei
die Weitwinkelkameravorrichtung (9) dazu ausgelegt ist, auch nach unten zu blicken.

10. System nach einem der vorhergehenden Ansprüche, ferner umfassend
eine seitliche Lidarvorrichtung (15), die an einer lateralen Seite (4) des Fahrzeugs (1) derart angebracht ist, dass sie von dem Fahrzeug (1) lateral blickt, um einen weiteren spezifischen Abschnitt der Umgebungen (14) des Fahrzeugs (1) zu überwachen, und eine andere Vorrichtung zum Überwachen des weiteren spezifischen Abschnitts der Umgebungen (14) des Fahrzeugs (1).

## Revendications

1. Système comprenant une remorque pouvant être adjointe à un véhicule (1) autonome entraîné et un unique véhicule (1) autonome entraîné, le système comprenant un système (2) de commande configuré pour entraîner de manière autonome le véhicule (1), comprenant
un premier capteur d'environnement adjoint à un emplacement précis du véhicule (1), configuré pour observer une partie précise des environnements (13) du véhicule (1), et
au moins un deuxième capteur d'environnement adjoint à un emplacement précis quelconque du véhicule, configuré pour observer une partie de la partie précise des environnements (13) du véhicule (1) simultanément à une observation du premier capteur d'environnement,
**caractérisé en ce qu'**il comprend en outre
un dispositif (11) radar de côté adjoint à un côté (4) latéral de la remorque du système, de manière à ce qu'il regarde latéralement au système pour observer une autre partie précise des environnements (14) du système et un autre dispositif pour observer l'autre partie précise des environnements (14) du système.

2. Système suivant la revendication 1, dans lequel
le premier capteur d'environnement est un dispositif (5) radar adjoint à un côté (3) arrière du véhicule (1), de manière à regarder vers l'arrière.

3. Système suivant la revendication 2, dans lequel
le au moins un deuxième capteur d'environnement ou l'un du au moins un deuxième capteur d'environnement est un dispositif (6) de caméra adjoint au côté (3) arrière du véhicule (1), de manière à regarder vers l'arrière.

4. Système suivant la revendication 1, dans lequel
le premier capteur d'environnement est un dispositif (6) de caméra adjoint à un côté arrière du véhicule (1), de manière à regarder vers l'arrière.

5. Système suivant l'une quelconque des revendications précédentes, dans lequel
le au moins un deuxième capteur d'environnent ou l'un du au moins un deuxième capteur d'environnement est un dispositif (7) capteur à ultrasons adjoint au côté (3) arrière du véhicule (1), de manière à regarder vers l'arrière.

6. Système suivant l'une quelconque des revendications précédentes, dans lequel
le au moins un deuxième capteur d'environnement ou l'un du au moins un deuxième capteur d'environnement est un dispositif (8) lidar adjoint au côté (3) arrière du véhicule (1), de manière à regarder vers l'arrière.

7. Système suivant l'une quelconque des revendications précédentes, dans lequel
le au moins un deuxième capteur d'environnement ou l'un du au moins un deuxième capteur d'environnement est un dispositif (9) de caméra à grand angle adjoint à une zone d'un coin (12) arrière du véhicule (1) et configuré pour regarder vers l'arrière et latéralement au véhicule (1), pour observer la partie précise des environnements (13) du véhicule (1) et une autre partie précise des environnements (14) du véhicule (1).

8. Système suivant la revendication 7, dans lequel
le dispositif (9) de caméra à grand angle est pourvu d'une lentille (10) fisheye.

9. Système suivant la revendication 7 ou 8, dans lequel
le dispositif (9) de caméra à grand angle est configuré pour regarder aussi vers l'arrière.

10. Système suivant l'une quelconque des revendications précédentes, comprenant en outre
un dispositif (15) de côté lidar est adjoint à un côté (4) latéral du véhicule (1), de manière à regarder latéralement au véhicule (1) pour observer une autre partie précise des environnements (14) du véhicule (1) et un autre dispositif pour observer l'autre partie précise des environnements (14) du véhicule (1) .
